# EUROPEAN PATENT SPECIFICATION

(11) **EP 3 868 585 B1**
(45) Date of publication and mention of the grant of the patent: **09.10.2024**
(21) Application number: 21166054.3
(22) Date of filing: 19.02.2013
(51) Int. Cl.: B60H 1/32, E02F 9/00, E02F 9/16, B60H 1/00, B62D 33/06, B62D 33/063, B62D 33/073, E02F 3/32, E02F 9/08

(54) **TURNING WORKING VEHICLE**
DREHENDES ARBEITSFAHRZEUG
VÉHICULE DE TRAVAIL ROTATIF

(30) Priority: 28.05.2012 JP 2012121225
(43) Date of publication of application: 25.08.2021
(62) Divisional of application: 13797294.9
(73) Proprietor: Yanmar Power Technology Co., Ltd., Osaka-shi Osaka 530-8311 (JP)
(72) Inventor: UCHIDA, Zenzo, Chikugo-shi Fukuoka 833-0055 (JP)
(74) Representative: Poindron, Cyrille

(56) References cited:
- EP-A1- 1 457 364
- EP-A2- 0 743 401
- EP-B1- 1 457 364
- WO-A1-01/45998
- JP-A- 2003 191 827
- JP-A- 2009 215 700

## Description

### Technical Field

The present invention relates to a turning working vehicle, and more particularly to an arrangement structure of a condenser for an air conditioner and the like of a turning working vehicle.

### Background Art

As one mode of the arrangement structure of a condenser for an air conditioner of a conventional turning working vehicle, there has been known the arrangement structure disclosed in patent literature 1. That is, in the turning working vehicle disclosed in patent literature 1, a turning body is mounted on a travelling part in a turnable manner, a cabin is mounted on the turning body, and an operation part is disposed in the cabin. A prime mover part is arranged at a position below and behind the operation part, and one portion of the prime mover part projects rearwardly from the lower rear wall of the cabin and covers one portion of the projecting prime mover part with a hood that can be opened and closed. Under the hood, the condenser for an air conditioner, a compressor and a receiver dryer are arranged as the air-conditioning equipment, while an air-conditioning part (an air-conditioning body) is arranged in the operation part. A cooling mechanism is configured such that the air-conditioning equipment is connected to the air-conditioning part through a refrigerant pipe.

### Citation List

### Patent Literature

PTL 1: JP-A-2003-285635

A further turning work vehicle is disclosed in EP 1 457 364 A1.

### Summary of Invention

### Technical Problem

However, since the condenser for an air conditioner, the compressor and the receiver dryer are arranged under the hood in the above-mentioned turning working vehicle, the hood on the turning body is increased in size by the same amount, thereby reducing the diameter of the turning radius of the turning body and becoming an obstruction.

Accordingly, it is an object of the present invention to provide a turning working vehicle which can reduce a size of a hood and, at the same time, can reduce a turning radius of a turning body by arranging a housing part for housing a condenser for an air conditioner and the like that houses a condenser for an air conditioner and a receiver dryer in a lower portion of a rear wall of a cabin positioned right above a hood. Solution to Problem

A turning working vehicle of the present invention described in claim 1 is a turning working vehicle comprising:a prime mover part, said prime mover part being covered at the rear with a hood arranged behind a turning body;an operation part, said operation part being arranged on said prime mover part; and a cabin, said cabin covering said operation part and a rear wall portion of said cabin being formed of a rear window portion and of a housing part,wherein the housing part for housing a condenser for an air conditioner is arranged under the rear window portion and over the hood.

In the turning working vehicle, the condenser for an air conditioner and the receiver dryer are housed in the housing part for housing a condenser for an air conditioner and the like which is mounted on the lower portion of the rear wall of the cabin. Accordingly, an engine room in which the condenser for an air conditioner and the receiver dryer has been housed heretofore can be made small in size by the same amount and, at the same time, the hood which has covered a portion of the engine room heretofore can be made small in size. Equipment which requires frequent maintenance such as a washer tank can be arranged in the housing part for housing a condenser for an air conditioner and the like and hence, the maintenance of the equipment can be performed simply, and cleaning can be also performed easily even in the case where a washing liquid is leaked from the washer tank.

The turning working vehicle of the present invention described in claim 2 is, in the turning working vehicle of the present invention described in claim 1, characterized in that either one of left and right edge portions on one side of an open/close cover is pivotally supported on the housing part for housing a condenser for an air conditioner and the like, either one of left and right edge portions on the other side of the open/close covers is made openable or closable, the hood is disposed just below the open/close cover, and the hood is openable or closable in the same direction as the open/close cover.

In the turning working vehicle, the hood and the open/close cover arranged just below the hood can be opened/closed in the same direction and hence, both the hood and the open/close cover can be opened easily whereby the maintenance of the prime mover part and the maintenance of the condenser for an air conditioner and the like can be performed simultaneously. Particularly, the maintenance of the refrigerant pipe which connects the condenser for an air conditioner arranged in the housing part for housing a condenser for an air conditioner and the like and the compressor arranged in the prime mover part can be performed easily.

The turning working vehicle of the present invention described in claim 3 is, in the turning working vehicle of the present invention described in claim 2, characterized in that the condenser for an air conditioner is arranged on a pivotally supporting side of the open/close cover in the housing part for housing a condenser for an air conditioner and the like, and the receiver dryer, a washer tank and a refrigerant pipe connecting part are disposed collectively on an open/close side of the open/close cover.

In the turning working vehicle, the receiver dryer, the washer tank and the refrigerant pipe connecting part are collectively disposed on the opening/closing side of the open/close cover and hence, access has become easier for performing checks-ups for the receiver dryer, replenishment of a washer liquid to the washer tank and checks-ups for leakage of a refrigerant in the refrigerant pipe connecting parts whereby these operations can be performed rapidly and reliably.

### ADVANTAGEOUS EFFECTS OF THE INVENTION

According to the present invention, the housing part for housing a condenser for an air conditioner and the like is mounted on the lower portion of the rear wall of the cabin positioned just above the hood, and the condenser for an air conditioner, the receiver dryer and the like are housed in the housing part for housing a condenser for an air conditioner and the like and hence, the hood can be made small and, at the same time, a turning radius of the turning body can be made small.

### BRIEF DESCRIPTION OF THE DRAWINGS

Fig. 1 is a front perspective view of a turning working vehicle (excavation working vehicle) according to the present invention.
Fig. 2 is a rear perspective view of the turning working vehicle (excavation working vehicle) according to the present invention.
Fig. 3 is a left side view of the turning working vehicle (excavation working vehicle) according to the present invention.
Fig. 4 is a right side view of the turning working vehicle (excavation working vehicle) according to the present invention.
Fig. 5 is a front view of the turning working vehicle (excavation working vehicle) according to the present invention.
Fig. 6 is a back view of the turning working vehicle (excavation working vehicle) according to the present invention.
Fig. 7 is a plan view of the turning working vehicle (excavation working vehicle) according to the present invention.
Fig. 8 is a front perspective view of a cabin.
Fig. 9 is a left side view of the cabin.
Fig. 10 is a right side view of the cabin.
Fig. 11 is a front view of the cabin.
Fig. 12 is a back view of the cabin.
Fig. 13 is a plan view of the cabin.
Fig. 14 is an explanatory cross-sectional plan view of an operation part.
Fig. 15 is an explanatory back view of a housing part for housing a condenser for an air conditioner and the like.
Fig. 16 is an explanatory cross-sectional side view of the operation part.
Fig. 17 is an explanatory perspective view for explaining mounting of the condenser for an air conditioner.
Fig. 18 is an explanatory perspective view of a refrigerant pipe on a turning body.
Fig. 19 is an explanatory perspective view of the refrigerant pipe.
Fig. 20 is an explanatory left-side view of the refrigerant pipe.
Fig. 21 is an explanatory plan view of the refrigerant pipe.

### MODE FOR CARRYING OUT THE INVENTION

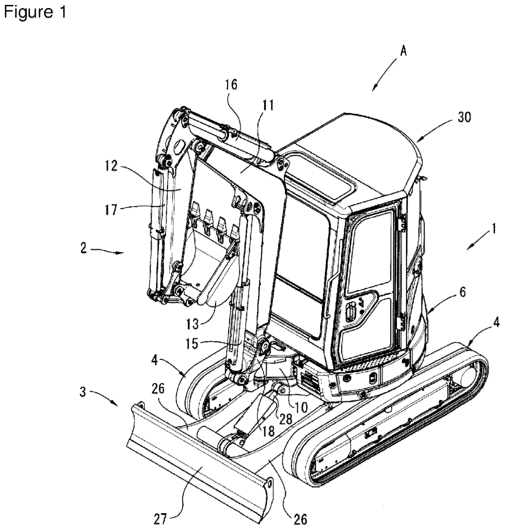

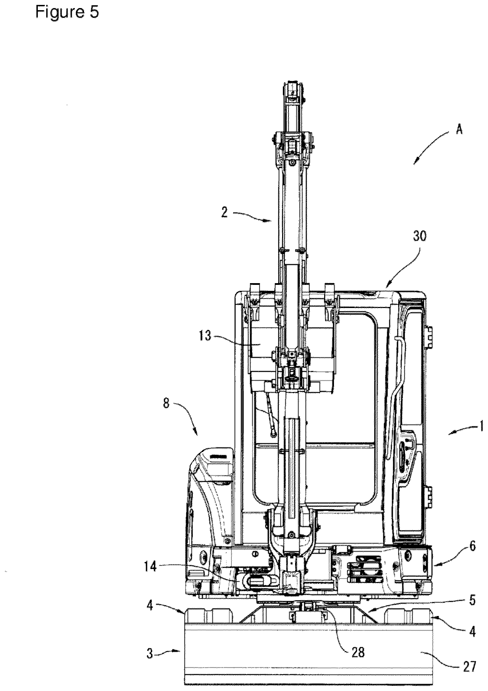

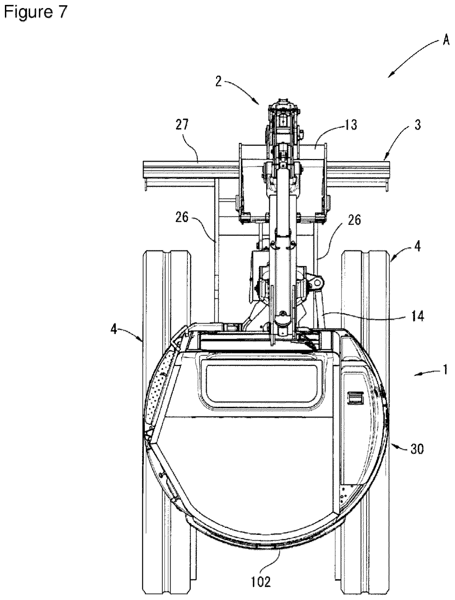

Hereinafter, the embodiment of the present invention is explained by reference to drawings. Symbol A shown in Fig. 1 to Fig. 7 indicates an excavation working vehicle which constitutes a turning working vehicle according to the present invention.

### [Schematic explanation of the whole excavation working vehicle]

As shown in Fig. 1 to Fig. 7, the excavation working vehicle A is constituted of: a traveling machine body 1 which is capable of self-traveling, an excavation part 2 and an earth removing part 3 which are constituted as a working part mounted on the traveling machine body 1. In this embodiment, as a working attachment, a bucket 13 for excavation is mounted on a distal end portion of the working part, and the bucket 13 constitutes the excavation part 2.

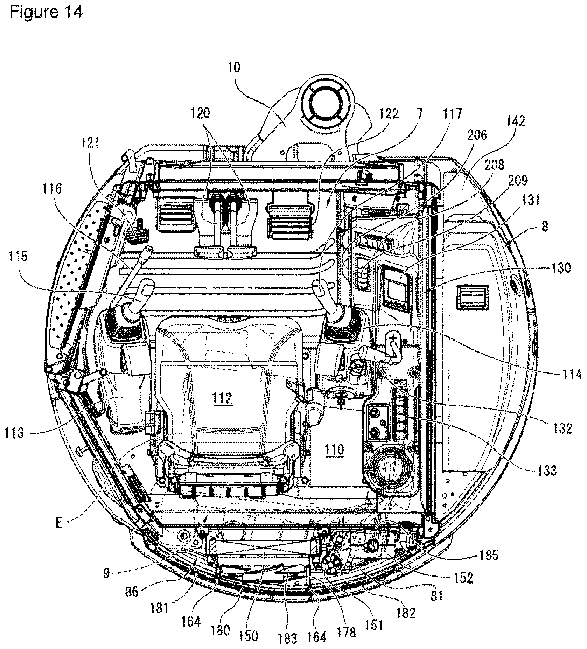

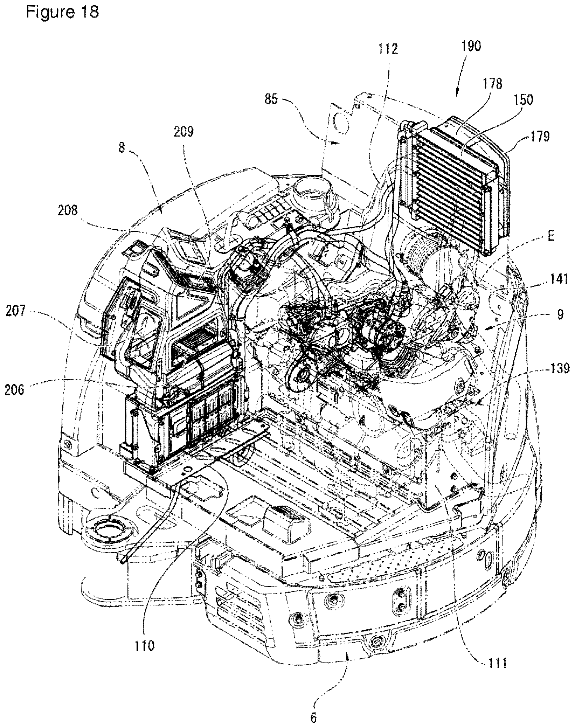

The traveling machine body 1 is capable of performing straight traveling in the back-and-forth direction and is also capable of performing turning traveling in the back-and-forth direction as well as in the left-and-right direction by rotatably driving a pair of left and right crawler-type traveling parts 4, 4 in the normal direction and the reverse direction respectively, and is also capable of performing sudden turning by rotatably driving the left and right traveling parts 4, 4 in the directions opposite to each other respectively. A base 5 is interposed between the traveling parts 4, 4, and a turning body 6 is mounted on the base 5 in a turnable manner. The turning body 6 is capable of turning in either the leftward or rightward direction about a vertically extending axis of a center portion. The turning body 6 is formed into an approximately disc shape as viewed in a plan view, and is turnable within a lateral width of the traveling parts 4, 4 (a distance between an outer edge portion of the left traveling part 4 and an outer edge portion of the right traveling part 4). As shown in Fig. 14 and Fig. 18, an operation part 7 and a tank portion 8 are disposed on a front half portion of the turning body 6, while a function part 9 is disposed on a rear half portion of the turning body 6. The operation part 7 and the function part 9 are surrounded by a cabin 30 described later. An excavation part stay 10 is mounted on the turning body 6 in a frontwardly projecting manner at a position close to one side of a front end portion of the turning body 6 (close to a right side in this embodiment), and a proximal end portion of the excavation part 2 is pivotally mounted on the excavation part stay 10. The earth removing part 3 is mounted on the base 5 between the pair of left and right traveling parts 4, 4.

The excavation part 2 includes a boom 11, an arm 12 and the bucket 13. The excavation part 2 further includes a swing cylinder 14, a boom cylinder 15, an arm cylinder 16 and a bucket cylinder 17 which rotatably operate the boom 11, the arm 12 and the bucket 13 respectively.

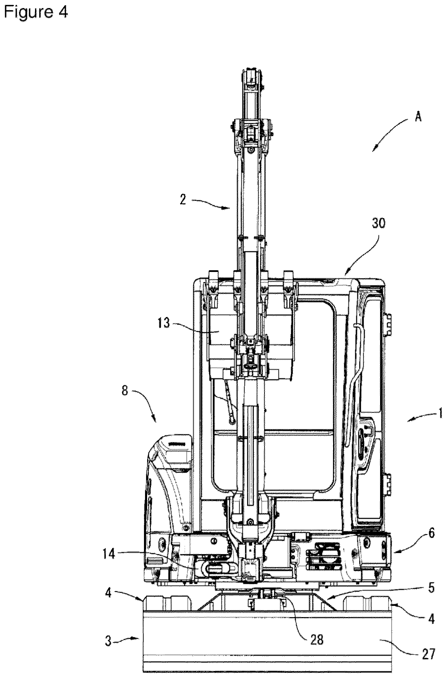

As shown in Fig. 4, on the excavation part stay 10 which is mounted in a projecting manner on the turning body 6 at a position close to a right side of the front end portion of the turning body 6, a swing body 18 is pivotally mounted on the pivot shaft 23 having an axis thereof directed in the vertical direction in such a manner that the swing body 18 is swingable about a pivot shaft 23 in the left-and-right direction. The swing cylinder 14 which extends and contracts in the back-and-forth direction is interposed between a right intermediate portion of the turning body 6 and a right front portion of the swing body 18, and the swing body 18 is swung (laterally swung) in an interlocking manner with the extending and contracting operation of the swing cylinder 14.

The boom 11 which is bent into an "L shape" as viewed in a side view and extends in the vertical direction is mounted on the swing body 18 in a vertically rotatable manner about a first pivot shaft 19 in a state where a proximal end portion of the boom 11 is pivotally supported on the first pivot shaft 19 having an axis thereof directed in the left-and-right direction. The boom cylinder 15 which extends and contracts in the vertical direction is interposed between a front end portion of the swing body 18 and a front intermediate portion of the boom 11, and the boom 11 is rotatably operated in the vertical direction in an interlocking manner with the extending and contracting operation of the boom cylinder 15.

The arm 12 is mounted on a distal end portion of the boom 11 in a rotatable manner in the back-and-forth direction (vertically rotatable manner) about a second pivot shaft 20 in a state where a proximal end portion of the arm 12 extending in the vertical direction is pivotally supported on the second pivot shaft 20 having an axis thereof directed in the left-and-right direction. The arm cylinder 16 which extends and contracts in the back-and-forth direction is interposed between a first cylinder mounting body 21 which is mounted on an intermediate portion of an upper surface of the boom 11 and a second cylinder mounting body 22 which is mounted on a proximal end portion of a front surface of the arm 12. Accordingly, the arm 12 is rotatably operated in the back-and-forth direction in an interlocking manner with the extending and contracting operation of the arm cylinder 16.

The bucket 13 is mounted on a distal end portion of the arm 12 in a rotatable manner in the back-and-forth direction (vertically rotatable manner) about a third pivot shaft 25 in a state where a base portion of the bucket 13 is pivotally supported on the third pivot shaft 25 having an axis thereof directed in the left-and-right direction. A bucket link 24 is interposed between the distal end portion of the arm 12 and a base portion of the bucket 13, and the bucket cylinder 17 which is extensible in the vertical direction is interposed between the bucket link 24 and the second cylinder mounting body 22 of the arm 12. Accordingly, the bucket 13 is rotatably operated in the back-and-forth direction (rotated in the vertical direction) in an interlocking manner with the extending and contracting operation of the bucket cylinder 17.

As shown in Fig. 1 to Fig. 7, the earth removing part 3 is provided between a pair of left and right traveling parts 4. The earth removing part 3 is configured such that proximal end portions of a pair of left and right blade arms 26, 26 which extends in the back-and-forth direction are mounted on the base 5 in a liftable manner, and a blade (earth removing plate) 27 which extends in the left-and-right direction extends between distal end portions of both blade arms 26, 26. The blade 27 is formed so as to have approximately the same width as the lateral width of the traveling parts 4, 4. Symbol 28 indicates a blade cylinder.

Due to such a constitution, when an operator controls the traveling parts 4 in the operation part 7, the traveling machine body 1 can perform the straight traveling in the back-and-forth direction and the turning traveling in the left-and-right directions as he desires. When the operator controls the excavation part 2 in the operation part 7, the traveling machine body 1 can perform the excavation operation. Further, when the operator controls the earth removing part 3 in the operation part 7, the traveling machine body 1 can perform the earth removing operation.

### [Explanation of cabin]

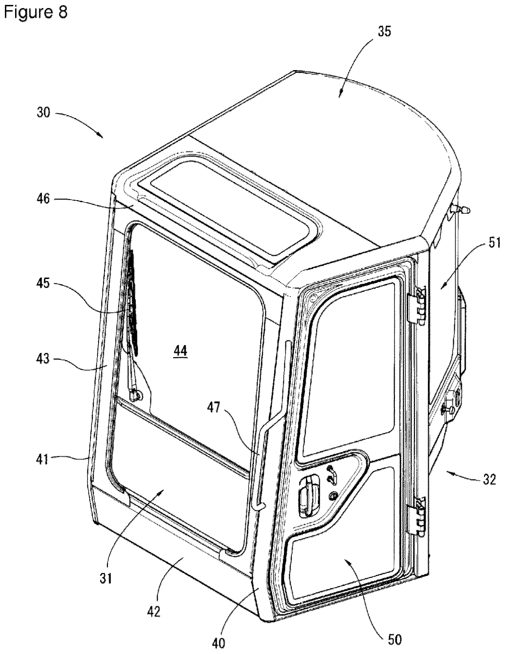

As described above, the cabin 30 is mounted on the turning body 6, and surrounds the operation part 7 and the function part 9 except for the tank portion 8. That is, as shown in Fig. 8 to Fig. 13, the cabin 30 is formed into a box shape with a lower surface opened which is defined by a front wall portion 31, a left side wall portion 32, a right side wall portion 33, a rear wall portion 34, and a ceiling portion 35.

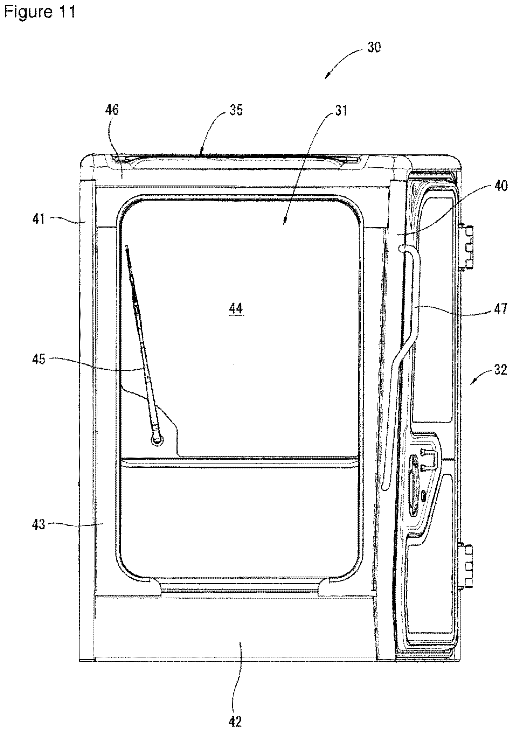

As shown in Fig. 11, the front wall portion 31 is configured such that a lower front wall body 42 extending in the left-and-right direction and having a laterally-elongated rectangular shape extends between lower portions of a pair of left and right front columnar bodies 40, 41 which extends in the vertical direction, a front glass frame body 43 having a vertically-elongated rectangular frame shape extends between upper portions of the front columnar bodies 41, 41, and a front glass 44 is mounted on the front glass frame body 43. Symbol 45 indicates a wiper. The pair of left and right front columnar bodies 40, 41 is formed in a rearwardly-inclined manner such that a rear side of the front columnar bodies 40, 41 is at a high position and a front side of the front columnar bodies 40, 41 is at a low position, and the front columnar bodies 40, 41 have lower portions thereof bent in a frontwardly inclined manner such that a front side is at a high position and a rear side is at a low position. Accordingly, the front glass 44 is mounted on the pair of left and right front columnar bodies 40, 41 in a rearwardly inclined manner, and the lower front wall body 42 below the front glass 44 is mounted in a frontwardly inclined manner. Symbol 46 indicates a front upper lateral member which is mounted between upper end portions of the pair of left and right front columnar bodies 40, 41 in an extending manner in the left-and-right direction, and symbol 47 indicates a hand rail which is mounted on the left front columnar body 40.

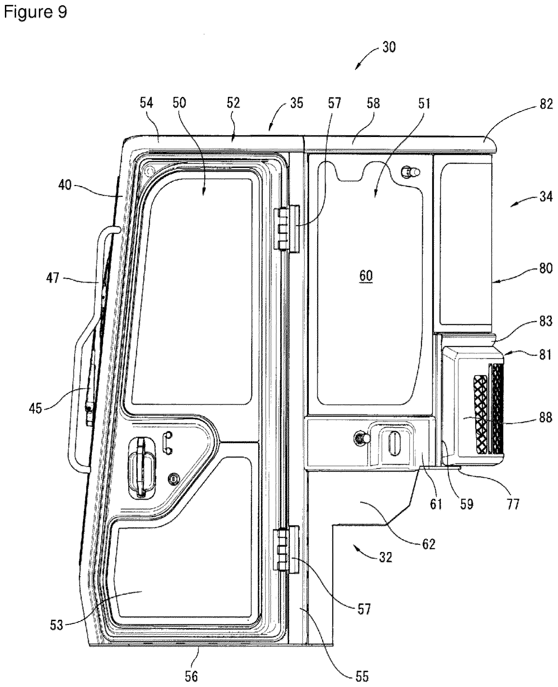

As shown in Fig. 9, the left side wall portion 32 is formed of a front half side wall portion 50 and a rear half side wall portion 51. The front half side wall portion 50 is formed of a door frame body 52, and an open/close door 53 which is mounted on the door frame body 52 in an openable and closable manner. The door frame body 52 is formed of a left front columnar body 40, a front half upper lateral member 54 which extends horizontally in the rearward and outward direction from an upper end portion of the left front columnar body 40, an intermediate columnar body 55 which has an upper end portion thereof connected to a rear end portion of the front half upper lateral member 54 and extends in the vertical direction, and a plate-like front half lower lateral member 56 which connects a lower end portion of the intermediate columnar body 55 and a lower end portion of the left front columnar body 40 to each other and extends in the back-and-forth direction, and the door frame body 52 is formed into a frame shape as viewed in a left side view. The open/close door 53 has an outer profile along an inner peripheral portion of the door frame body 52, and a rear edge portion of the open/close door 53 is pivotally supported on and connected to the intermediate columnar body 55 by way of upper and lower hinges 57, 57 so that the open/close door 53 can be opened and closed by rotating a front edge portion side of the open/close door 53 about the pivotally-supporting and connecting portion.

The rear half side wall portion 51 of the left side wall portion 32 is configured such that a rear half upper lateral member 58 extends horizontally in the rearward and inward direction from an upper end portion of the intermediate columnar body 55, an upper end portion of a left rear columnar body 59 which extends in the vertical direction is connected to a rear end portion of the rear half upper lateral member 58, a left rear half glass window 60 is mounted on most of an inner peripheral portion of the intermediate columnar body 55, the rear half upper lateral member 58, and the left rear columnar body 59, and a door opening receiving body 61 is mounted on a lower edge portion of the left rear half glass window 60. A left lower edge wall 62 which is formed into a hook shape along a lower edge portion of the door opening receiving body 61 and a lower half rear edge portion of the intermediate columnar body 55 is mounted on a lower side of the door opening receiving body 61.

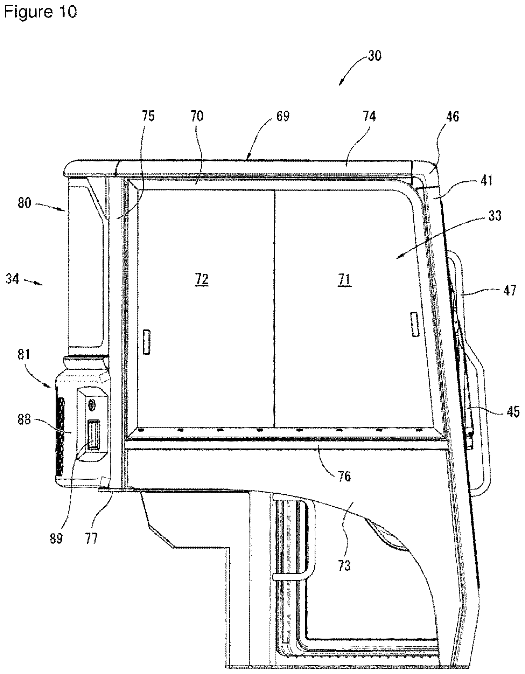

As shown in Fig. 10, the right side wall portion 33 is configured such that front and rear glass windows 71, 72 are mounted on an upper portion of a right side wall forming frame body 69 in a slidable manner in the back-and-forth direction by way of a window frame body 70, and a right lower edge wall 73 is mounted on a lower portion of the right side wall forming frame body 69. The right side wall forming frame body 69 is formed of a right upper lateral member 74 which extends horizontally in the direct rearward direction from a right end portion of the front upper lateral member 46, a right rear columnar body 75 which has an upper end portion thereof connected to a rear end portion of the right upper lateral member 74 and extends in the vertical direction, and a right intermediate lateral member 76 which extends between a lower portion of the right rear columnar body 75 and an intermediate portion of the right front columnar body 41 and extends in the back-and-forth direction, and an upper portion of the right side wall forming frame body 69 is formed into a frame shape. The right rear columnar body 75 and the left rear columnar body 59 are arranged to face each other in an opposed manner in the left-and-right direction, and a rear lower lateral plate member 77 which extends in the left-and-right direction extends between lower ends of both columnar bodies 59, 75. The right lower edge wall 73 is mounted along a lower half rear edge portion of the right rear columnar body 75, a lower edge portion of the right intermediate lateral member 76, and a lower front edge portion of the right rear columnar body 75, and a lower edge portion of the right lower edge wall 73 are formed into an upwardly projecting shape by bending.

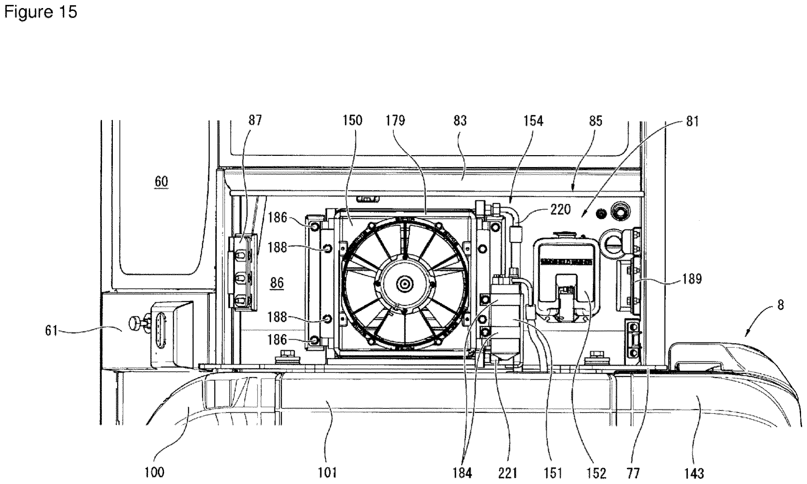

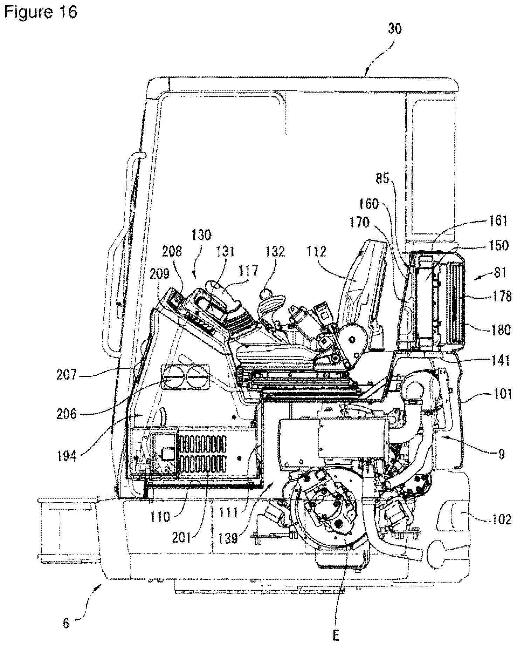

As shown in Fig. 9, Fig. 10 and Fig. 12, the rear wall portion 34 is formed of a rear window portion 80 and a housing part 81 for housing a condenser for an air conditioner and the like which are arranged in the vertical direction. The rear window portion 80 is configured such that a rear upper lateral member 82 which is formed in a rearwardly projecting manner by bending extends between upper end portions of the left and right rear columnar bodies 59, 74, a plate-like rear intermediate partition body 83 which has a rear edge portion thereof projected rearwardly by bending extends between intermediate portions of the left and right rear columnar bodies 59, 75, and a curved rear glass window 84 which has a rectangular shape as viewed in a back view and projects rearwardly as viewed in a plan view is mounted on inner peripheral portions of these rear upper lateral member 82 and the rear intermediate partition body 83 by way of a rear window frame body 79. The housing part 81 for housing a condenser for an air conditioner and the like is configured such that a box-shaped housing part inner wall 85 (see Fig. 15 to Fig. 17) is mounted on an inner peripheral portion which is formed into a laterally-elongated rectangular frame shape by lower half portions of the left and right rear columnar bodies 59, 75, the rear intermediate partition body 83 and the rear lower lateral member 77 in a frontwardly projecting manner so that a recessed housing space 86 (see Fig. 14 and Fig. 15) with a rear surface opened is formed. A left edge portion of an open/close cover 88 is pivotally supported on and is connected to a lower half portion of the left rear columnar body 59 by way of a pivotally support bracket 87 (see Fig. 15) so that the housing space 86 can be opened and closed by the open/close cover 88. Rear edge portions of the open/close cover 88, the rear intermediate partition body 83, and the rear lower lateral member 77 are formed into a curved shape along a shape of a rear peripheral portion of the turning body 6. Symbol 89 indicates a handle for opening and closing the open/close cover 88 mounted on a right portion of the open/close cover 88.

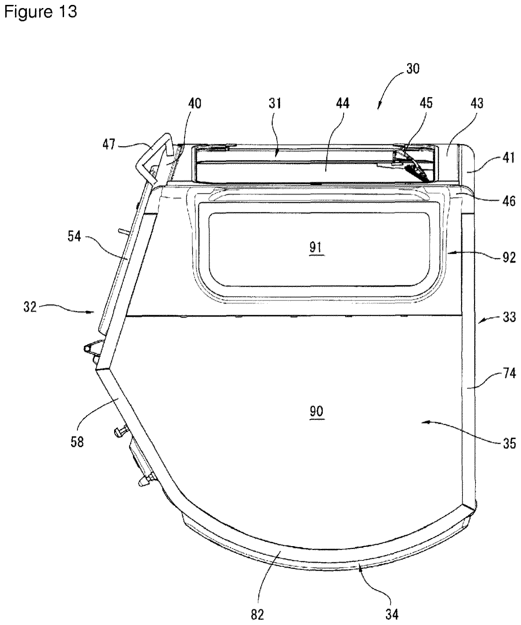

A shown in Fig. 13, the ceiling portion 35 is configured such that a ceiling plate 90 is mounted on an inner peripheral portion which is formed into a ring shape by the front upper lateral member 46, the front half upper lateral member 54, the rear half upper lateral member 58, the rear upper lateral member 82, and the right upper lateral member 74. A skylight window glass 91 having a laterally-elongated rectangular shape is mounted on a front portion of the ceiling plate 90 thus forming a skylight window 92.

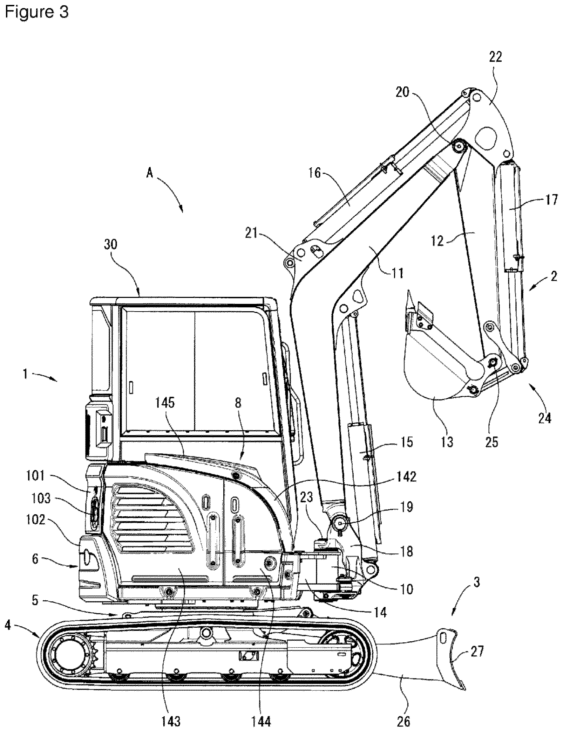

As shown in Fig. 3, Fig. 4 and Fig. 6, a left rear edge wall 100 which is formed by bending along a left rear edge portion of the turning body 6 which is formed into an arc shape as viewed in a plan view is mounted on the left rear edge portion of the turning body 6 in a raised manner, the hood 101 and a counter weight 102 which are formed by bending along a rear edge portion of the turning body 6 are vertically arranged on the rear edge portion of the turning body 6 in hierarchical structure, and the tank portion 8 is arranged on a right rear edge portion of the turning body 6. The cabin 30 surrounds the operation part 7 and the function part 9 by the left rear edge wall 100, the hood 101, the counter weight 102, and the tank portion 8 on the turning body 6. Symbol 103 indicates a hood handle which is formed on a right portion of the hood 101, and the hood 101 can be opened leftwardly and rearwardly by way of the hood handle 103.

### [Explanation of operation part]

As shown in Fig. 14 and Fig. 18, the operation part 7 is configured such that a front wall of a seat support base (seat mount) 111 is arranged on a rear edge portion of a floor plate member 110 which forms a portion of the turning body 6, and an operator's seat 112 is mounted on a center portion of the seat support base 111. A left lever support case 113 is disposed on a left side of the operator's seat 112 on the seat support base 111, while a right lever support case 114 is disposed on a right side of the operator's seat 112. A left pilot valve (not shown in the drawing) is disposed in the inside of the left lever support case 113, a left operation part manipulation lever 115 projects upwardly from a front upper portion of the left lever support case 113, and the left operation part manipulation lever 115 can be manipulated in a tiltable manner in the back-and-forth direction and in the left-and-right direction.

Further, the left lever support case 113 can change the position thereof between the in-use position where the left lever support case 113 is arranged approximately horizontally and the non-use position where the left lever support case 113 is flipped up rearwardly and upwardly about a rear portion thereof. Symbol 116 indicates a lock lever which projects frontwardly from a front end wall of the left lever support case 113.

A right pilot valve (not shown in the drawing) is disposed in the inside of the right lever support case 114, a right operation part manipulation lever 117 projects upwardly from a front upper portion of the right lever support case 114, and the right operation part manipulation lever 117 can be manipulated in a tiltable manner in the back-and-forth direction and in the left-and-right direction.

Left and right traveling levers 120, 120 which extend in the vertical direction through lever holes formed in a front center portion of the floor plate member 110 are provided in an erected manner just in front of the operator's seat 112, and the respective traveling levers 120, 120 can be manipulated in a tiltable manner in the back-and-forth direction. Traveling hydraulic motors for the traveling parts 4, 4 are hydraulically connected to the respective traveling levers 120, 120 by way of traveling control valves (not shown in the drawing), and traveling of the traveling parts 4, 4 can be controlled by interlocking the rotation of the traveling hydraulic motors in the normal direction or in the reverse direction with tilting of the respective traveling levers 120, 120 in the back-and-forth direction. Symbol 121 is an accelerating pedal which is mounted on the floor plate member 110 at a position in the vicinity of a left side of the left traveling lever 120, and a vehicle speed is accelerated by stepping-on the acceleration pedal 121. Symbol 122 indicates a boom swing control pedal which is mounted on the floor plate member 110 at a position in the vicinity of a right side of the right traveling lever 120.

An operation panel part 130 having a long width in the back-and-forth direction and a short width in the left-and-right direction is arranged adjacent to the right lever support case 114 on a right side of the right lever support case 114. A liquid crystal monitor 131 is disposed on a front portion of an upper surface of the operation panel part 130, a blade lever 132 is projected from an intermediate portion of the operation panel part 130 such that the blade lever 132 can be manipulated in a tiltable manner in the back-and-forth direction, and a group of various switches 133 is disposed on a rear portion of the operation panel part 130. The blade cylinder 28 of the earth removing portion 3 is hydraulically connected to the blade lever 132 by way of a blade cylinder control valve (not shown in the drawing), and the earth removing part 3 can be operated in a liftable manner by interlocking the extending and contracting operation of the blade cylinder 28 with the tilting manipulation of the blade lever 132 in the back-and-forth direction.

### [Explanation of function part]

As shown in Fig. 14 and Fig. 18, the function part 9 is configured such that an engine room 139 is formed below the seat support base 111, and an engine E which constitutes a prime mover part and the like and a support machine frame portion 141 are disposed in the inside of the engine room 139. The engine E is arranged in a state where an axis of the engine E is directed in the left-and-right direction. The support machine frame portion 141 is mounted on a back side of the engine E in a raised manner, and the rear lower lateral plate member 77 is placed on and connected to an upper end portion of the support machine frame portion 141 thus fixing a rear portion of the cabin 30.

### [Explanation of tank portion]

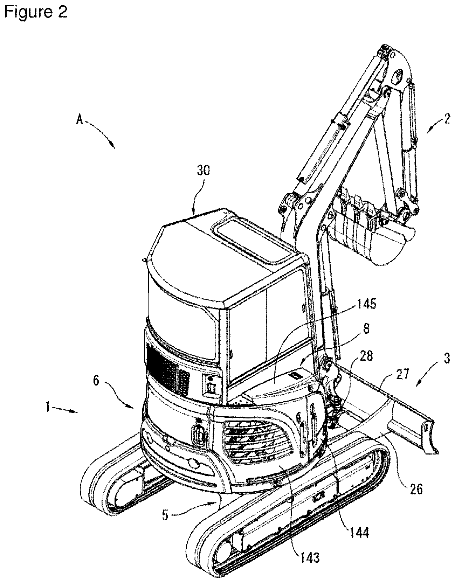

The tank portion 8 is configured such that a fuel tank which stores a fuel for driving the engine E and a working oil tank which stores working oil therein (both not shown in the drawing) are arranged adjacent to each other in the back-and-forth direction. These tanks are closed by a front tank cover body 142 which is formed on a right front portion of the turning body 6 in a raised manner while being bent into a curved shape, first and second tank cover bodies 143, 144 which are arranged along a side edge portion of the front portion of the turning body 6 (see Fig. 2 and Fig. 4), an inner wall body which is raised on a right inner side of the floor plate member 110, and an upper surface cover body 145 which is disposed on upper edge portions of inner wall bodies (not shown in the drawing) of these front tank cover body 142 and the first and second tank cover bodies 143, 144 (see Fig. 2 and Fig. 4) . An upper side of both tanks can be opened or closed by the upper surface cover body 145.

### [Explanation of housing part for housing condenser for air conditioner and the like]

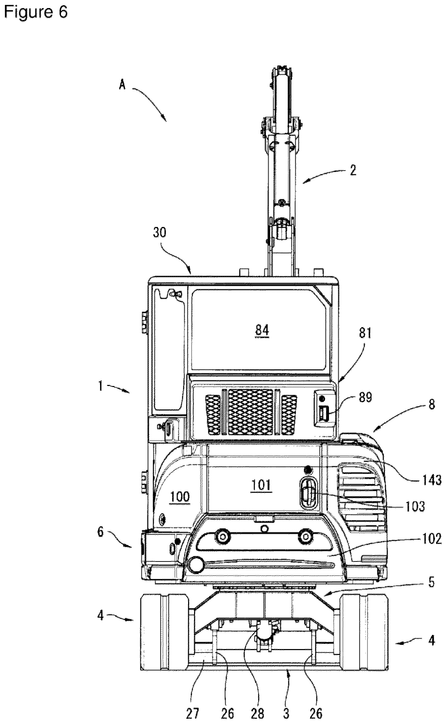

As shown in Fig. 6, Fig. 12, Fig. 14 to Fig. 17, the housing part 81 for housing a condenser for an air conditioner and the like is disposed on a lower portion of the rear wall portion 34 of the cabin 30. The housing part 81 for housing a condenser for an air conditioner and the like stores a condenser 150 for an air conditioner which constitutes a portion of an air conditioner 190, a receiver drier 151, a washer tank 152 and the like. On the housing part 81 for housing a condenser for an air conditioner and the like, one edge portion of left and right edge portions (in this embodiment, left edge portion) of the open/close cover 88 is pivotally supported so as to open or close the other edge portion side of the left and right edge portions of the open/close cover 88 (in this embodiment, the right edge portion). Further, in the housing part 81 for housing a condenser for an air conditioner and the like, the condenser 150 for an air conditioner is disposed on a side where the open/close cover 88 is pivotally supported, while the receiver drier 151, the washer tank 152 and a refrigerant pipe connecting part 154 are collectively disposed on a side where the open/close cover body 153 is opened and closed.

A rear portion which constitutes a portion of the engine E is disposed in a rearwardly projecting manner, and the projecting rear portion of the engine E is covered by the hood 101 in an openable and closable manner. The hood 101 is disposed just below the open/close cover 88, and can be opened and closed in the same direction as the open/close cover 88 (in this embodiment, a right edge portion side being openable or closable leftwardly and rearwardly using a left edge portion of the hood as a pivotally supported portion).

Due to such a constitution, the condenser 150 for an air conditioner and the receiver drier 151 are housed in the inside of the housing part 81 for housing a condenser for an air conditioner and the like which is disposed on the lower portion of the rear wall portion 34 of the cabin 30. Accordingly, the engine room 139 for housing the condenser 150 for an air conditioner and the receiver drier 151 therein can be made small by the same amount and, at the same time, the hood 101 which covers a portion of the engine room 139 can be made small. Further, equipment which requires maintenance frequently such as the washer tank 152 can be disposed in the housing part 81 for housing a condenser for an air conditioner and the like and hence, maintenance can be easily performed and, at the same time, even when a water liquid in the washer tank 152 leaks, cleaning can be easily performed.

The hood 101 and the open/close cover 88 which are disposed just below the hood 101 can be opened and closed in the same direction and hence, both the hood 101 and the open/close cover 88 can be easily opened whereby maintenance of the engine E and maintenance of the condenser 150 for an air conditioner and the like can be performed simultaneously. Particularly, maintenance of a refrigerant pipe which connects the condenser 150 for an air conditioner disposed in the housing part 81 for housing a condenser for an air conditioner and the like and a compressor disposed in the engine E to each other can be easily performed.

The receiver drier 151, the washer tank 152, and the refrigerant pipe connecting part 154 are collectively disposed in the housing part 81 for housing a condenser for an air conditioner and the like on a side where the open/close cover 88 is opened and closed and hence, access can be facilitated for performing checking on the receiver drier 151, replenishment of a washer liquid to the washer tank 152 and checking for leakage of refrigerant in the refrigerant pipe connecting part 154 can be facilitated whereby these operations can be performed rapidly and reliably.

Hereinafter, the constitution of the housing part 81 for housing a condenser for an air conditioner and the like is explained in more detail.

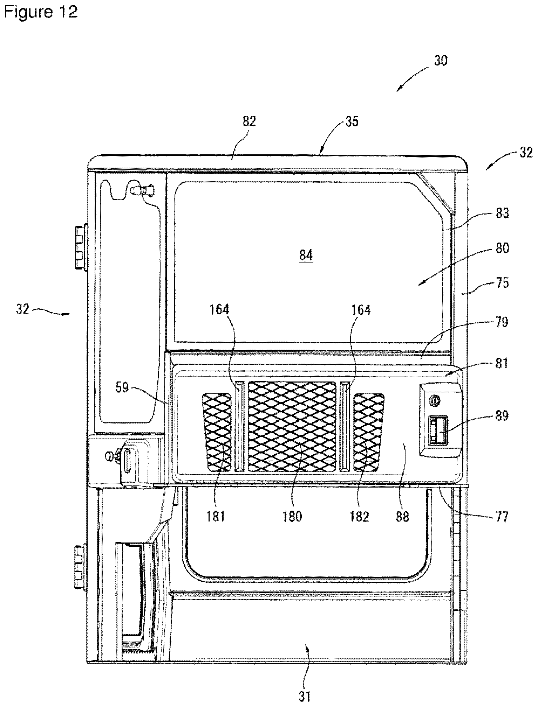

As shown in Fig. 14 to Fig. 17, the housing part 81 for housing a condenser for an air conditioner and the like is configured such that the box-shaped housing part inner wall 85 is formed of: an erected wall 160 having a laterally-elongated quadrangular shape; an upper wall 161 which extends approximately horizontally in the rearward direction from an upper edge portion of the erected wall 160; the rear lower lateral plate member 77 which is contiguously mounted on a lower edge portion of the erected wall 160 in a state where the rear lower lateral plate member 77 projects approximately horizontally in the rearward direction; and left and right side walls 163, 163 which are connected to left and right side edge portions of the erected wall 160 respectively in a rearwardly projecting manner, and the recessed housing space 86 is formed in the inside of the box-shaped housing part inner wall 85. The pivotally-support bracket 87 which is rotated about an axis extending in the vertical direction is mounted on the left side wall 163, and a left edge portion of the open/close cover body 153 is mounted on the pivotally-support bracket 87. The open/close cover 88 is formed into a laterally-elongated quadrangular shape, and is formed into a circular arc shape by being bent along a rear peripheral portion of the turning body 6. The handle 89 is mounted on a right end portion of the open/close cover 88 (see Fig. 12), and the open/close cover 88 can be opened leftwardly and rearwardly and also can be closed by locking by way of the handle 89.

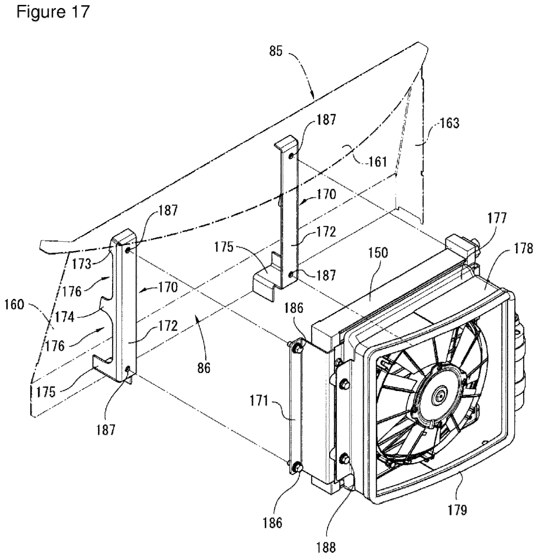

As shown in Fig. 17, a pair of left and right condenser support bodies 170 is mounted on a left portion and a center portion of the erected wall 160 respectively, and the condenser 150 for an air conditioner is mounted on the pair of left and right condenser support bodies 170 by way of brackets 171. In the condenser support body 170, leg members 173, 174, 175 which respectively project frontwardly are mounted on an upper portion, an intermediate portion and a lower portion of a body member 172 which extends in the vertical direction. Front end portions of the leg members 173, 174, 175 are contiguously mounted on the erected wall 160, and ventilation openings 176 which open in the left-and-right direction are formed between the leg members 173, 174, 175 whose front surfaces are closed by the erected wall 160. A wind guide body 178 having a quadrangular cylindrical shape is connected to a rear surface of the condenser 150 for an air conditioner by way of a connecting member 177, and a resilient contact member 179 is mounted on a rear edge portion of the wind guide body 178. With the resilient contact member 179, left and right contact portions 164, 164 (see Fig. 12) which are formed on left and right side portions of an inner surface (front surface) of the open/close cover body 153 in a projecting manner while extending in the vertical direction are brought into contact with in a closed state. Accordingly, the housing space 86 is divided into a space in the inside of the wind guide body 178 and a space in a remaining portion. Ventilation portions 180, 181, 182 respectively having a network structure are formed on a portion of the open/close cover body 153 which faces the condenser 150 for an air conditioner in an opposed manner and the left and right side portions of the open/close cover body 153 respectively. A fan 183 which incorporates an electrically-operated motor therein is disposed in the inside of the wind guide body 178, and the fan 183 is rotatably driven by the electrically-operated motor. Symbol 186 indicates connecting screws, symbol 187 indicates screw holes, and symbol 188 indicates connecting bolts.

When the condenser 150 for an air conditioner is unnecessary at the time of heating or the like, for example, by removing the connecting screws 186 and by integrally removing the condenser 150 for an air conditioner and the wind guide body 178 from the condenser support bodies 170, it is possible to ensure the spacious housing space 86. Accordingly, a tool box and the like can be stored in the inside of the housing space 86 and hence, it is possible to effectively use the housing space 86.

Due to such a constitution, by rotatably driving the fan 183 using the electrically-operated motor, air in the housing space 86 can be discharged to the outside of the machine through the condenser 150 for an air conditioner, the wind guide body 178 and the ventilation portion 180 in this order. In this case, outside air is sucked into the inside of the housing space 86 through the ventilation portions 181, 182, and then flows into the condenser 150 for an air conditioner through the ventilation port 176 of the condenser support body 170. As a result, the condenser 150 for an air conditioner is cooled by air.

The receiver drier 151 which is formed of a vertically-elongated cylindrical container is mounted on the right connecting member 177 by way of a receiver drier mounting bracket 184. The receiver drier 151 is a tank which temporarily stores a refrigerant liquefied by the condenser 150 for an air conditioner, and a strainer for removing impurities from the refrigerant and a desiccant for removing moisture from the refrigerant are stored in the inside of the receiver drier 151. The washer tank 152 is mounted and arranged on the erected wall 160 by way of a tank mounting bracket 185 on a right side of the receiver drier 151. Symbol 189 indicates a closed lock portion for the open/close cover body 153.

### [Explanation of air conditioner]

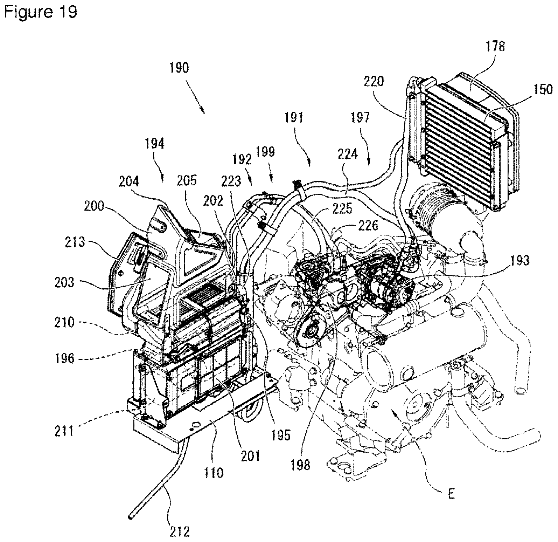

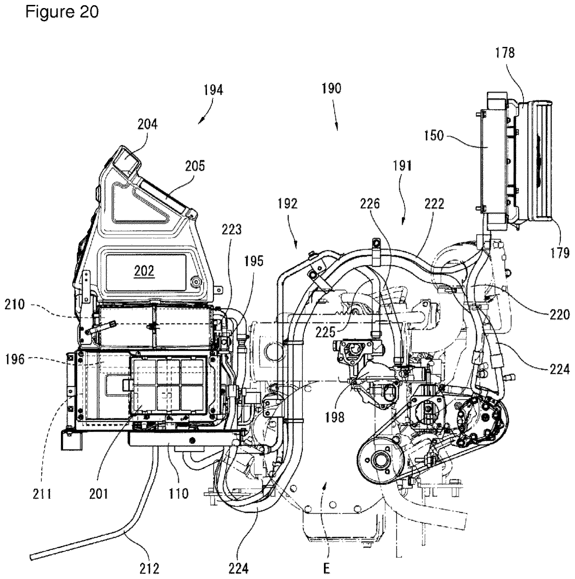

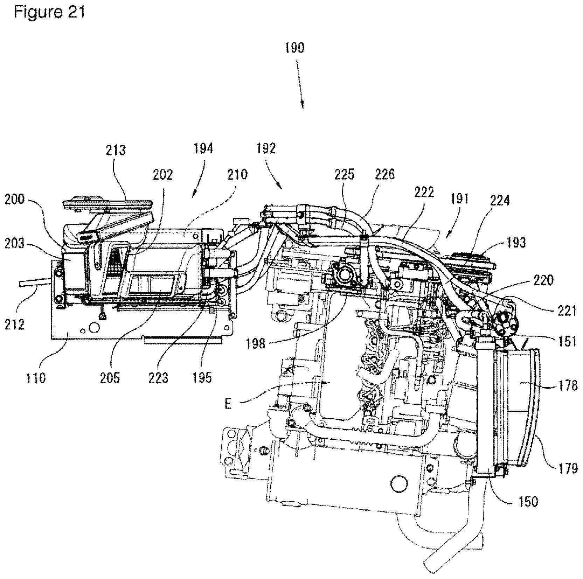

As shown in Fig. 18 to Fig. 21, the air conditioner 190 includes a cooling cycle mechanism 191 and a heating cycle mechanism 192. The cooling cycle mechanism 191 is constituted of: a compressor 193 which is interlockingly connected to the engine E, is disposed behind and above the engine E and compresses a refrigerant; the condenser 150 for an air conditioner; the receiver drier 151; an expansion valve 195; an evaporator 196 which is mounted on a cooled air and heated air discharge portion 194; and a refrigerant pipe 197 by which these components are communicably connected to each other.

The compressor 193 is provided for compressing a refrigerant. The condenser 150 for an air conditioner is provided for liquefying a refrigerant which becomes high temperature and high pressure due to the compression of the refrigerant by cooling. The receiver drier 151 is a tank in which a strainer for removing impurities from a refrigerant and a desiccant for removing moisture from the refrigerant are stored and which temporarily stores a refrigerant liquefied by the condenser 150 for an air conditioner. The expansion valve 195 is mounted on an inlet of the evaporator 196. When a high-temperature and high-pressure liquefied refrigerant passes through the expansion valve 195, the refrigerant is changed into a gas a mist form from a liquid form and is injected. The evaporated refrigerant passes through the evaporator 196 and removes heat from the evaporator 196 so that the evaporator 196 per se is cooled. The refrigerant pipe 197 is constituted of: a first refrigerant tube 220 which communicably connects the compressor 193 and the condenser 150 for an air conditioner to each other; a second refrigerant tube 221 which communicably connects the condenser 150 for an air conditioner and the receiver drier 151 to each other; a third refrigerant tube 222 which communicably connects the receiver drier 151 and the expansion valve 195 to each other; a fourth refrigerant tube 223 which communicably connects the expansion valve 195 and the evaporator 196 to each other; and a fifth refrigerant tube 224 which communicably connects the evaporator 196 and the compressor 193 to each other.

The heating cycle mechanism 192 is constituted of: a water pump 198 which is interlockingly connected to the engine E and is disposed in front of, on a right side of, and above the engine E; a heater core 210 which is mounted on the cooled air and heated air discharge portion 194 and functions as a heat exchanger; and a hot water pipe 199 by which these components ranging from the water pump 198 to the heater core 210 are communicably connected to each other. The hot water pipe 199 is constituted of a discharge-side hot water tube 225 and a return-side hot water tube 226.

The cooled air and heated air discharge portion 194 is disposed on the right side of the operation part 7 and just in front of the right lever support case 114. That is, the cooled air and heated air discharge portion 194 is configured such that a rectangular-box-shaped cooled air and heated air discharge case 200 which is tapered upwardly is raised from the floor plate member 110 of the operation part 7, and an upper end portion of the cooled air and heated air discharge case 200 is contiguously connected to a front portion of the operation panel part 130. A left upper discharge port 202 and a left lower suction hole 201 are formed in an upper portion and a lower portion of a left side wall of the cooled air and heated air discharge case 200 respectively, a front upper discharge port 203 is formed in an upper portion of a front wall of the cooled air and heated air discharge case 200, and a laterally-extending upper end discharge port 204 and a longitudinally-extending upper end discharge port 205 are formed in an upper end wall of the cooled air and heated air discharge case 200. On these discharge ports 202 to 205, first to fourth discharge direction adjusters 206 to 209 such as louvers by which the discharge direction of discharged air can be adjusted are disposed. Symbol 206 indicates a ventilator which is communicably connected to a right side wall of the cooled air and heated air discharge case 200.

In the inside of the cooled air and heated air discharge case 200, the heater core 210 and the evaporator 196 are disposed in an upper portion, and a blower fan 211 is disposed below the heater core 210 and the evaporator 196. During cooling, air sucked in by the blower fan 211 through the left lower suction hole 201 and fed under pressure from a lower side to an upper side is cooled by the evaporator 196 (heat exchange), and is discharged from the respective discharge ports 202 to 205 as cooled air. On the other hand, during heating, air sucked by the blower fan 211 through the left lower suction hole 201 and fed under pressure from a lower side to an upper side is heated by the heater core 210 (heat exchange), and is discharged from the respective discharge ports 202 to 205 as heated air. Symbol 212 indicates a drain pipe.

### Reference Signs List

A: excavation working vehicle
1: traveling machine body
2: excavation part
3: earth removing part
4: traveling part
150: condenser for an air conditioner
151: receiver drier
152: washer tank
153: open/close cover
154: refrigerant pipe connecting part

## Claims

1. A turning working vehicle comprising:
a prime mover part, said prime mover part being covered at the rear with a hood (101) arranged behind a turning body (6);
an operation part (7), said operation part (7) being arranged on said prime mover part; and
a cabin (30), said cabin (30) covering said operation part (7) **characterized in that** the cabin comprises
a rear wall portion (34) of said cabin being formed of a rear window portion (80) and of a housing part (81), and **in that**
the housing part (81) for housing a condenser (150) for an air conditioner is arranged under the rear window portion (80) and over the hood (101).

2. The turning working vehicle according to claim 1, configured with at least a recessed housing space (86) with a rear surface opened.

3. The turning working vehicle according to claim 2, wherein the housing part (81) is configured with a box-shaped housing part inner wall (85) mounted on an inner peripheral portion which is formed into a laterally-elongated rectangular frame shaped by lower half portions of left and right rear columnar bodies (59, 75) of the cabin (30), a rear intermediate partition body (83) and a rear lower lateral member (77) in a frontwardly projecting manner so that the recessed housing space (86) with a rear surface opened is formed.

4. The turning working vehicle according to anyone of claim 1 to 3, wherein said housing part (81) houses a condenser (150) and a receiver dryer (151) for an air conditioner (190).

## Patentansprüche

1. Drehendes Arbeitsfahrzeug, das Folgendes umfasst:
ein Antriebsmaschinenteil, wobei das Antriebsmaschinenteil hinten von einer Haube (101) abgedeckt wird, die hinter einem Drehkörper (6) angeordnet ist;
ein Betriebsteil (7), wobei das Betriebsteil (7) am Antriebsmaschinenteil angeordnet ist; und
eine Kabine (30), wobei die Kabine (30) das Betriebsteil (7) abdeckt, **dadurch gekennzeichnet, dass** die Kabine Folgendes umfasst
einen Rückwandabschnitt (34) der Kabine, der aus einem hinteren Fensterabschnitt (80) und einem Gehäuseteil (81) gebildet ist,
und dadurch, dass das Gehäuseteil (81) zum Umschließen eines Verflüssigers (150) für eine Klimaanlage unter dem hinteren Fensterabschnitt (80) und über der Haube (101) angeordnet ist.

2. Drehendes Arbeitsfahrzeug nach Anspruch 1, das mit mindestens einem vertieften Gehäuseraum (86) mit einer hinteren geöffneten Fläche ausgelegt ist.

3. Drehendes Arbeitsfahrzeug nach Anspruch 2, wobei das Gehäuseteil (81) mit einer kastenförmigen Gehäuseteilinnenwand (85) ausgelegt ist, die an einem Innenumfangsabschnitt montiert ist, der zu einem seitlich langgestreckten rechteckigen Rahmen ausgebildet ist, der von unteren halben Abschnitten von einem linken und einem rechten hinteren Säulenkörper (59, 75) der Kabine (30), einem hinteren Zwischenabschnittskörper (83) und einem hinteren unteren seitlichen Element (77) in einer nach vorn vorstehenden Weise geformt ist, derart, dass der vertiefte Gehäuseraum (86) mit einer hinteren geöffneten Fläche ausgebildet ist.

4. Drehendes Arbeitsfahrzeug nach einem der Ansprüche 1 bis 3, wobei das Gehäuseteil (81) einen Verflüssiger (150), und einen Sammler-Trockner (151) für eine Klimaanlage (190) umschließt.

## Revendications

1. Véhicule de travail rotatif comprenant :
une partie de moteur d'entraînement, ladite partie de moteur d'entraînement étant recouverte, à l'arrière, avec un capot (101) agencé derrière un corps rotatif (6);
une partie d'actionnement (7), ladite partie d'actionnement (7) étant agencée sur ladite partie de moteur d'entraînement; et
une cabine (30), ladite cabine (30) recouvrant ladite partie d'actionnement (7), **caractérisé en ce que** la cabine comprend :
une partie de paroi arrière (34) de ladite cabine qui est formée avec une partie de fenêtre arrière (80) et avec une partie de logement (81),
et **en ce que** :
la partie de logement (81) pour loger un condenseur (150) pour un climatiseur est agencée sous la partie de fenêtre arrière (80) et sur le capot (101).

2. Véhicule de travail rotatif selon la revendication 1, configuré avec au moins un espace de logement enfoncé (86) avec une surface arrière ouverte.

3. Véhicule de travail rotatif selon la revendication 2, dans lequel la partie de logement (81) est configurée avec une paroi interne de partie de logement en forme de boîte (85) montée sur une partie périphérique interne qui est formée dans un cadre rectangulaire latéralement allongé formé par des demi-parties inférieures des corps colonnaires arrière gauche et droit (59, 75) de la cabine (30), un corps de séparation intermédiaire arrière (83) et un élément latéral inférieur arrière (77) en saillie vers l'avant de sorte que l'espace de logement enfoncé (86) avec une surface arrière ouverte est formé.

4. Véhicule de travail rotatif selon l'une quelconque des revendications 1 à 3, dans lequel ladite partie de logement (81) loge un condenseur (150) et un réservoir déshydrateur (151) pour un climatiseur (190).
